# EUROPEAN PATENT APPLICATION

(11) **EP 0 999 415 A2**
(43) Date of publication of application: **10.05.2000**
(21) Application number: 99308771.7
(22) Date of filing: 04.11.1999
(51) Int. Cl.: F24D 3/14

(54) **Underfloor heating panels**

(30) Priority: 05.11.1998 GB 9824083
(71) Applicant: Ingram, Rex Anthony, Axminster, Devon EX13 7PU (GB)
(72) Inventor: Ingram, Rex Anthony, Axminster, Devon EX13 7PU (GB)
(74) Representative: Brown, Michael Stanley

(57) **Abstract**

A panel (10) for use in the installation of an underfloor heating system is formed of a foamed plastic material and has a number of channels (11) formed in its upper surface. Each channel (11) includes first sections (11a) in which a heating pipe (12) is a close fit and sections (11b) which are of substantially greater width than the sections (11a) and receive a thermally conductive material, e.g. the screed (15), so that the thermally conductive material acts as a heat diffuser for the heating pipe (12).

## Description

### Field of the Invention

This invention relates to underfloor heating panels and to methods of installing underfloor heating systems using such panels.

The panel of the present invention has been developed to make it easier to install underfloor heating in floors which are constructed either as a screeded floor over insulation or as a timber floor deck which is fully supported on rigid insulation (normally referred to as a fully-floating floor).

### Background to the Invention

It is presently common practice to install warm water underfloor heating in a screeded floor using any one of the construction methods illustrated in Figures 1 and 1a, 2 and 2a, and 3 and 3a.

Figures 1 and 1a show how rigid insulation panels (a) are covered with steel reinforcing mesh (b) and how the heating pipe (c) is tied to the top of the mesh. Screed (d) is then laid over the whole.

Figures 2 and 2a show how rigid insulation panels (a) have heating pipe (c) fixed in place using staples (e) which catch into a fabric surface which is bonded to the top surface of the insulation. Screed (d) is then again laid over the whole assemblage.

Figures 3 and 3a show how rigid insulation panels (a) have fixing rails (f) attached and how the heating pipe (c) is held in place by them. Screed (d) is then laid over the whole assemblage.

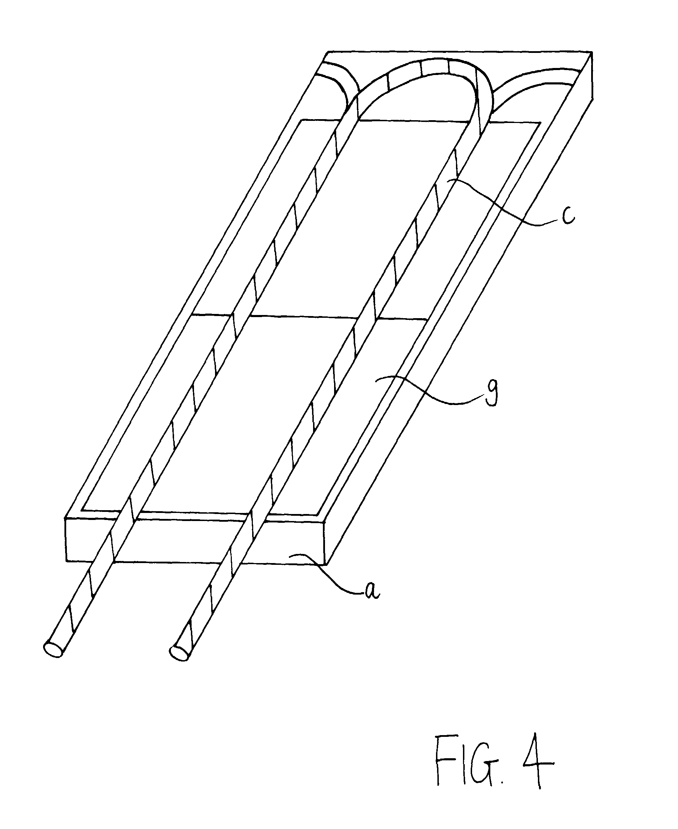

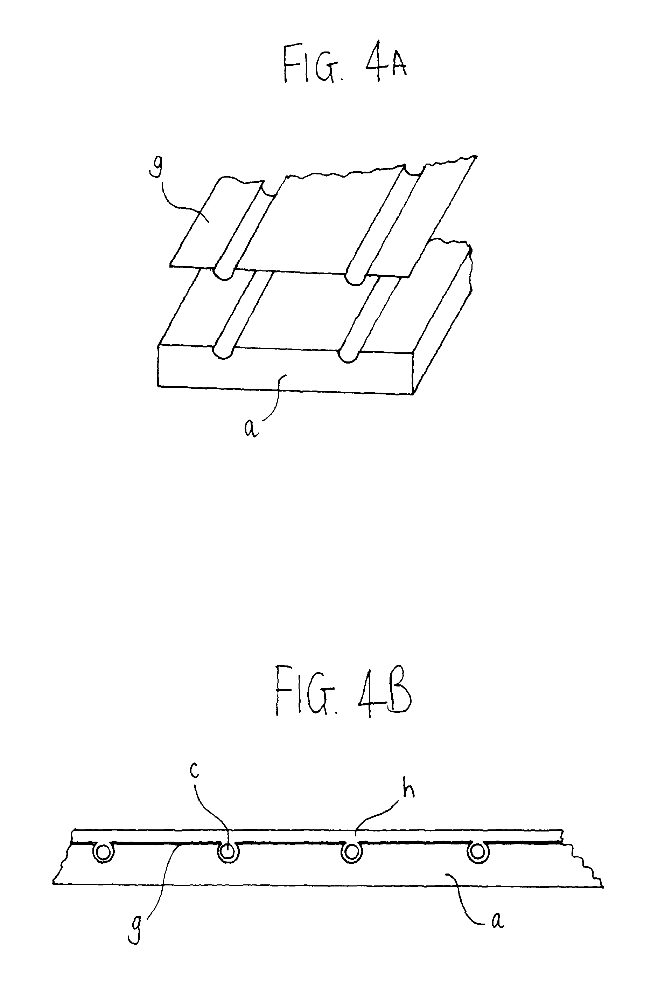

It is also common practice to install warm water underfloor heating in a fully floating floor using grooved rigid insulation and rigid aluminium heat diffuser plates. Figures 4, 4a and 4b show rigid insulation (a) with heat diffuser plates (g) and heating pipe (c) beneath a timber floor deck (h). The diffuser plates (g) are typically formed from hard-temper aluminium sheets 0.4 to 0.7 mm. thick and they have channels to accept the heating pipe. The width of the channels corresponds to the outside diameter of the heating pipe (c).

Figures 4, 4a and 4b show a configuration having two channels per plate, but it is also common to have a single channel per plate when a plate must be used with larger diameter pipe. The diffuser plates (g) are set on top of the grooved insulation (a) in such a way that each preformed diffuser plate (g) engages with the channels formed in the top of the insulation (a). The heating pipe (c) is pressed into the channels in the diffuser plate (g) which then acts as a fin to the pipe (c), conducting the heat away from the pipe (c) and spreading it evenly across the underside of the floor deck. The floor deck is typically chipboard, plywood, cement-bonded particle board or timber planks.

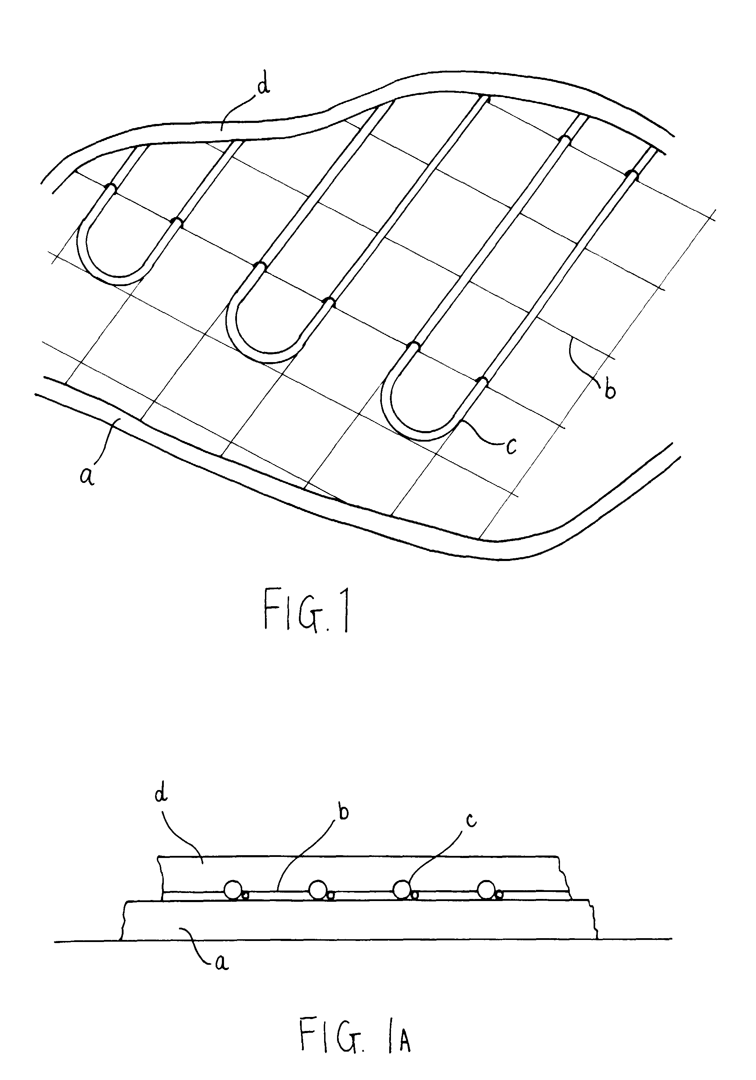

The heat output from any of these forms of construction is quite satisfactory and they are widely used but they have a number of disadvantages. Those for screeded floors are as follows:
1) In all three of the cases illustrated in Figures 1 to 3, the heating pipe (c) sits on top of the insulation (a). The specialists who lay the screed surface must transport the screed - generally in wheelbarrows - across the floor and thus across the top of the exposed pipe (c). As a consequence, the heating pipe (c) is very susceptible to damage before the heating system has even been brought into use,
2) In all three cases, the pipe is installed within the thickness of the screed and yet, with the screed in place, there is no simple way of knowing where the pipe has been set or at what depth. Fixings cannot be confidently drilled into the screed. Expansion gaps cannot be confidently sawn into the screed across its width. The problem is most acute with the most commonly used, pipe-on-mesh installation method shown in Figures 1 and 1a, because the mesh is often not flat and the pipe can be at any depth within the screed.
3) With the pipe-on-mesh method shown in Figures 1 and 1a, the mesh itself usually has 4 to 6 mm. bars. These can only be cut using an angle grinder, and this introduces Health and Safety issues. The cut ends of the bars are supposed to be wired together to stop them catching ankles or feet, and this is time-consuming.
4) In all three cases, the heat output from the floor varies according to the spacing of the pipe and, in each case, the actual installed pipe spacing is dependent on the skill and accuracy of the installer. It is difficult to achieve consistent quality of installation across a range of building sites using different installers.
5) In all three cases, the labour cost of installation is high.

Current methods of installing underfloor heating systems in floating floors also have a number of disadvantages, as follows:-
1) The heating system is formed on site as an assembly of pipe, diffuser plates and insulation which have to be cut to length and installed by skilled installers.
2) Installation is labour-intensive and costly.
3)The diffuser plates are themselves expensive.
4) The cutting of the diffuser plates in particular must be done with great care by hand using tin shears. Jagged edges can be left which can damage the heating pipe.
5) The diffuser plates have to be rigid and strong enough to withstand handling on site and to prevent them being damaged too easily. Despite being from 0.4 to 0.7 mm. in thickness, they are still prone to being bent and are subject to wind damage when being unloaded or moved around a site.
6) The strength and rigidity of the diffuser plates makes them noisy in use. The aluminium itself expands and contracts much more than the timber floor deck with which it is in close contact and, as a consequence, differential creep occurs at the boundary between the plate and the floor deck during warm up and cool down, and this creates creaking sounds which users complain about.

It is an object of the present invention to provide an underfloor heating panel and a method of installing an underfloor heating system which address these shortcomings.

### Summary of the Invention

According to a first aspect of the present invention there is provided an underfloor heating panel which is formed with a channel in which a heating pipe is received, the channel including at least one first section in which the heating pipe is a close fit and at least one second section which is wider than the or each first section, thermally conductive material being introduced into said at least one second section in use of the panel to provide an underfloor heating system.

The panel is preferably formed with a plurality of parallel channels each of which includes a plurality of first sections and a plurality of second sections.

According to a second aspect of the present invention there is provided a method of installing an underfloor heating system which includes providing at least one underfloor heating panel as defined above, inserting a heating pipe in the channel so that it is held in the channel as a result of its close fit in said at least one first section of the channel, and introducing a thermally conductive material into the at least one second section of the channel.

The term "heating pipe" as used herein includes a pipe through which hot water can be passed and a cable which contains an electrical heating element.

Each panel is preferably formed of a foamed or expanded synthetic plastics material, such as foamed polystyrene, and the channel second sections may be formed using, for example, either a router or a heated wire.

The installation of an underfloor heating system preferably includes the use of a plurality of panels as defined above in conjunction with other flooring panels which have pipe channels of constant width, the same as the pipe outside diameter, so that the heating pipe is a close fit in the channels of said other panels.

As applied to a screeded floor, the thermally conductive material introduced into the second sections of the channels is preferably the screed material. As applied to a fully floating floor, the thermally conductive material introduced into the second sections of the channels is preferably a sand/cement mix, the amount of which is such that its upper surface is flush with the upper surface of the associated panel.

### Brief Description of the Drawings

Figures 1 and 1a illustrate a current method of installing warm water underfloor heating in a screeded floor,

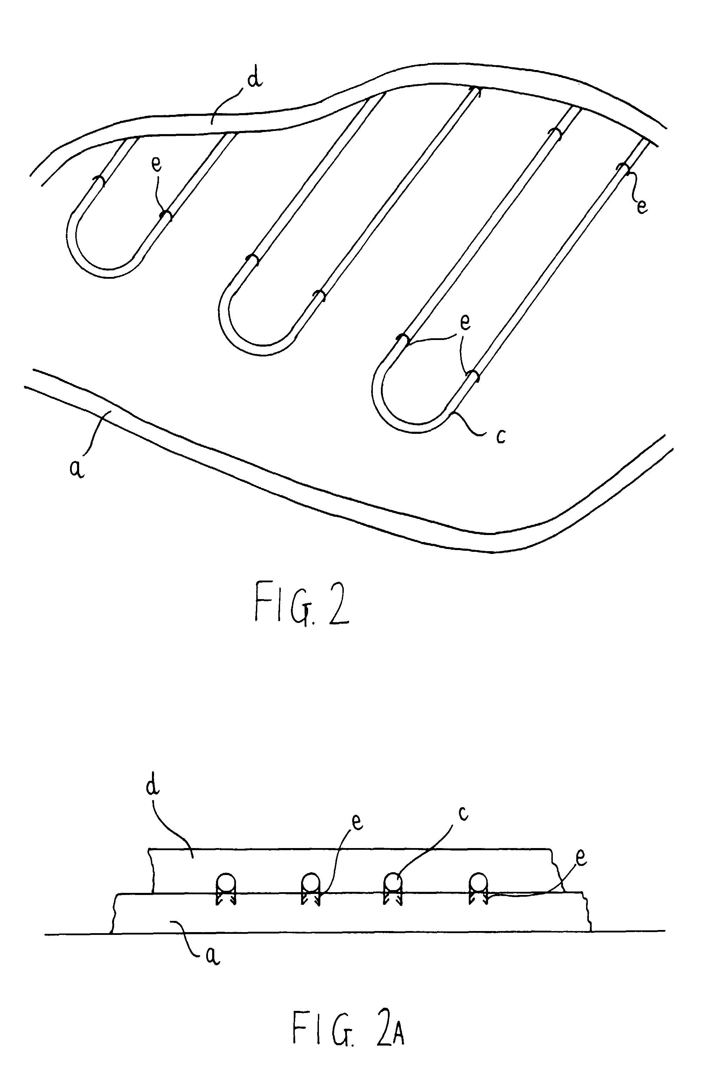

Figures 2 and 2a illustrate another current method of installing warm water underfloor heating in a screeded floor,

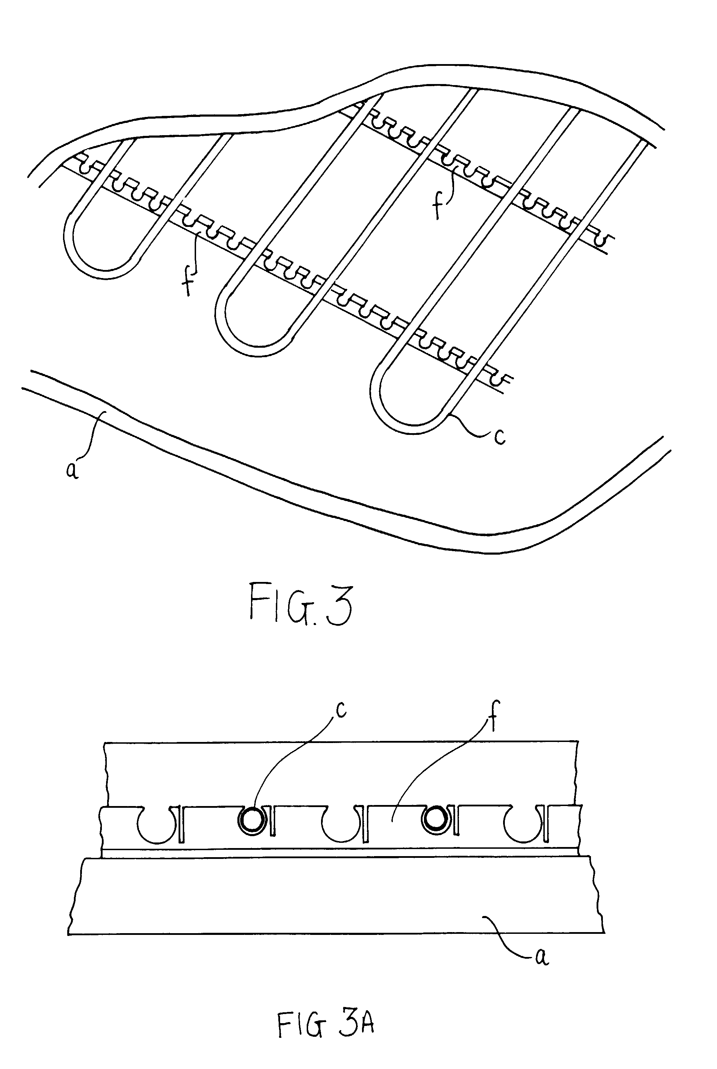

Figures 3 and 3a illustrate a further method of installing warm water underfloor heating in a screeded floor,
Figures 4, 4a and 4b illustrate a current method of installing warm water underfloor heating in a fully floating floor,

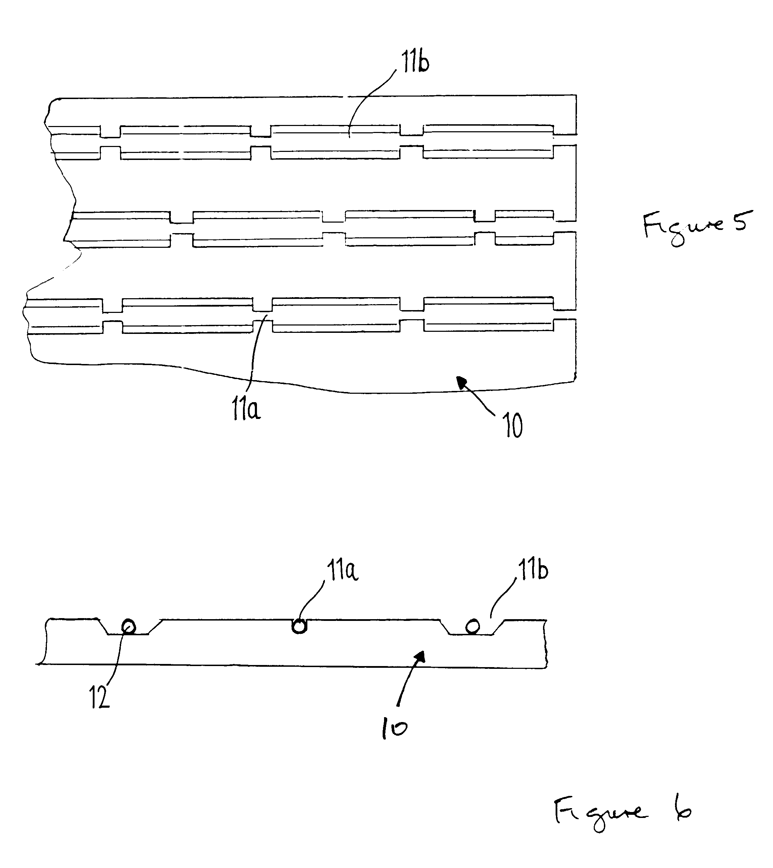

Figure 5 is a plan view of the panel of the present invention,

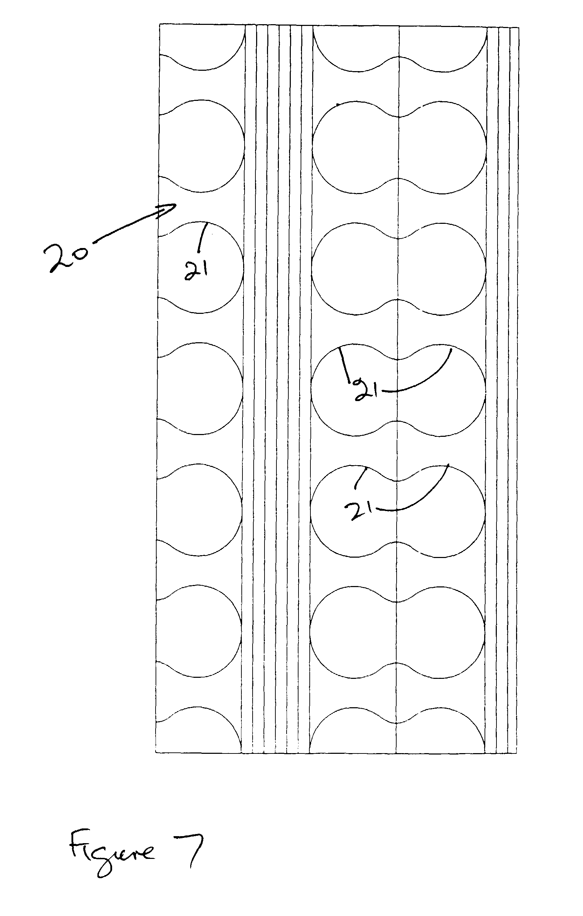

Figure 6 is a sectional view of the panel of Figure 5, along the line 6 - 6 of Figure 5,

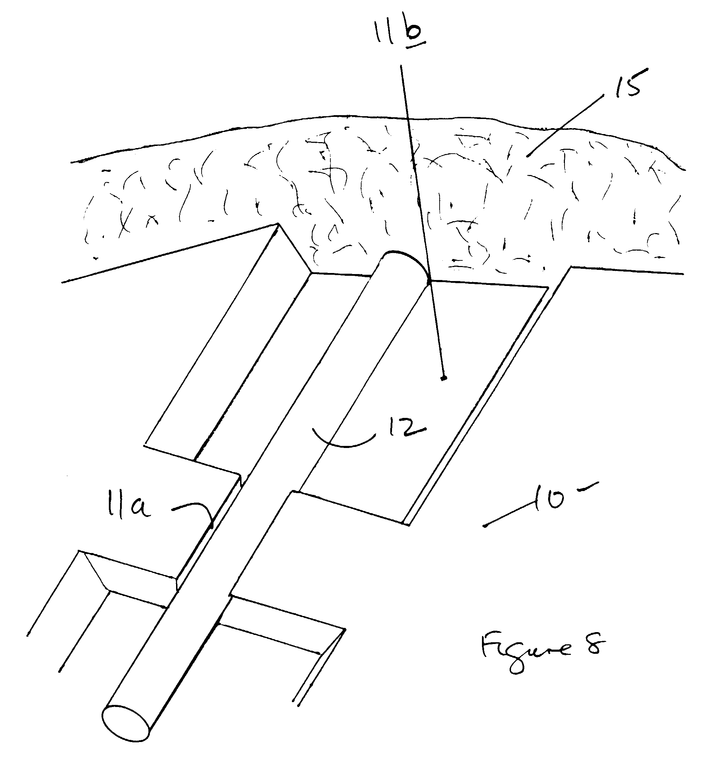

Figure 7 is a plan view of an insulating panel for use with the panel of Figure 5,

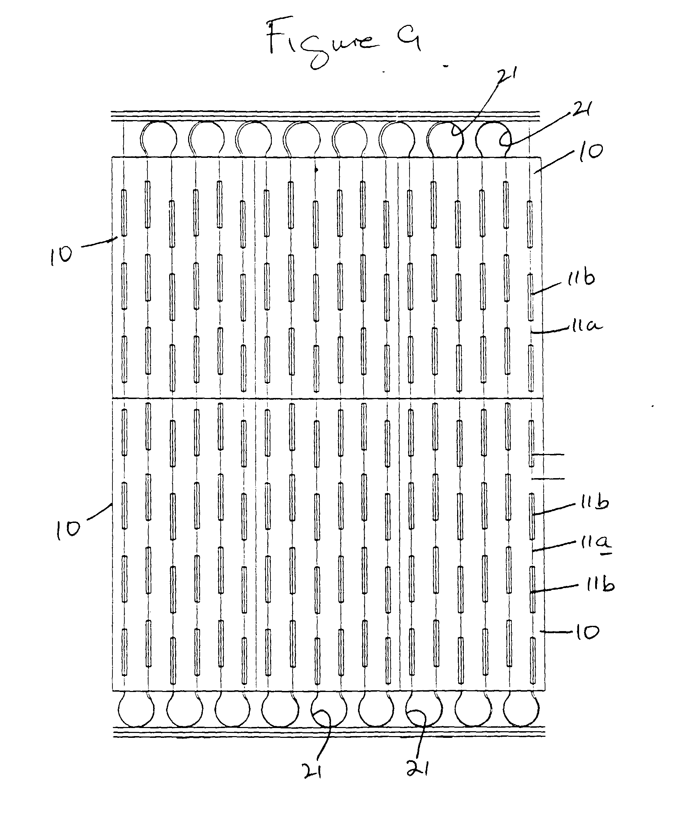

Figure 8 shows a stage in the installation of the panel of Figure 5 in a screeded floor,
Figure 9 shows an assembly of panels,

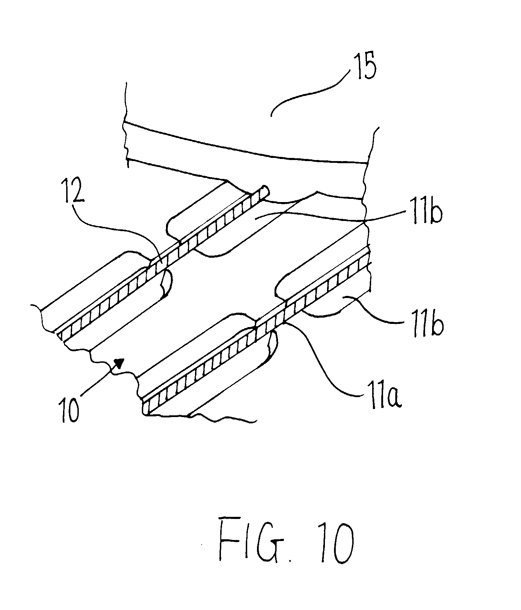

Figure 10 shows a modified form of panel in accordance with the present invention,

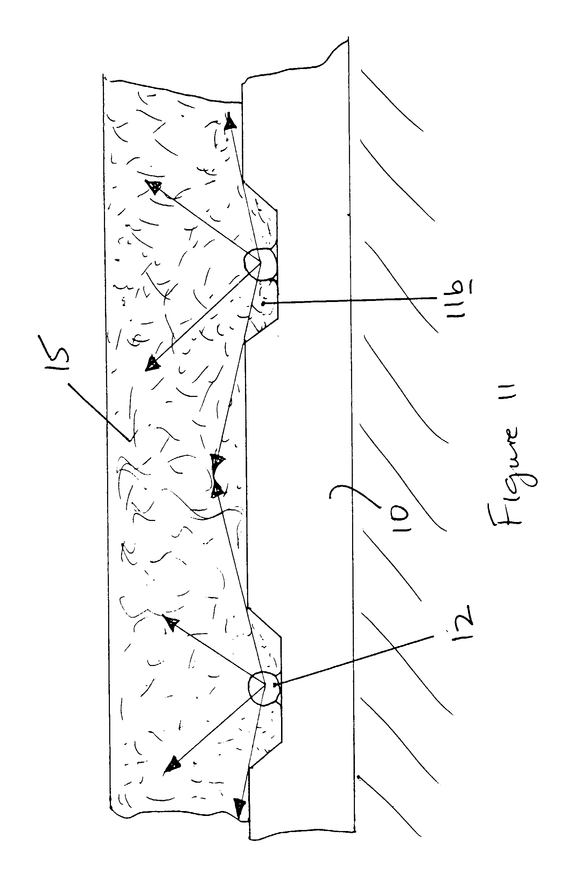

Figure 11 shows the pattern of heat distribution in a screeded floor,

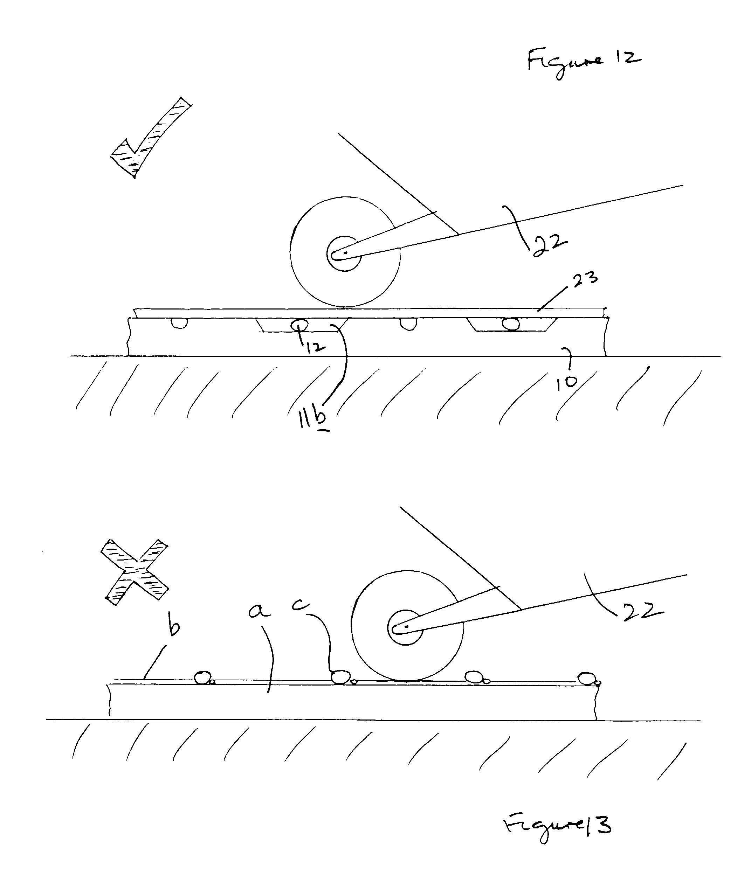

Figure 12 shows the use of a wheelbarrow in the transport of a sand/cement mixture when producing a screeded floor using panels as shown in Figure 5,
Figure 13 shows the use of a wheelbarrow in the transport of a sand/cement mixture when producing a screeded floor using the pipe on mesh method shown in Figures 1 and 1a,

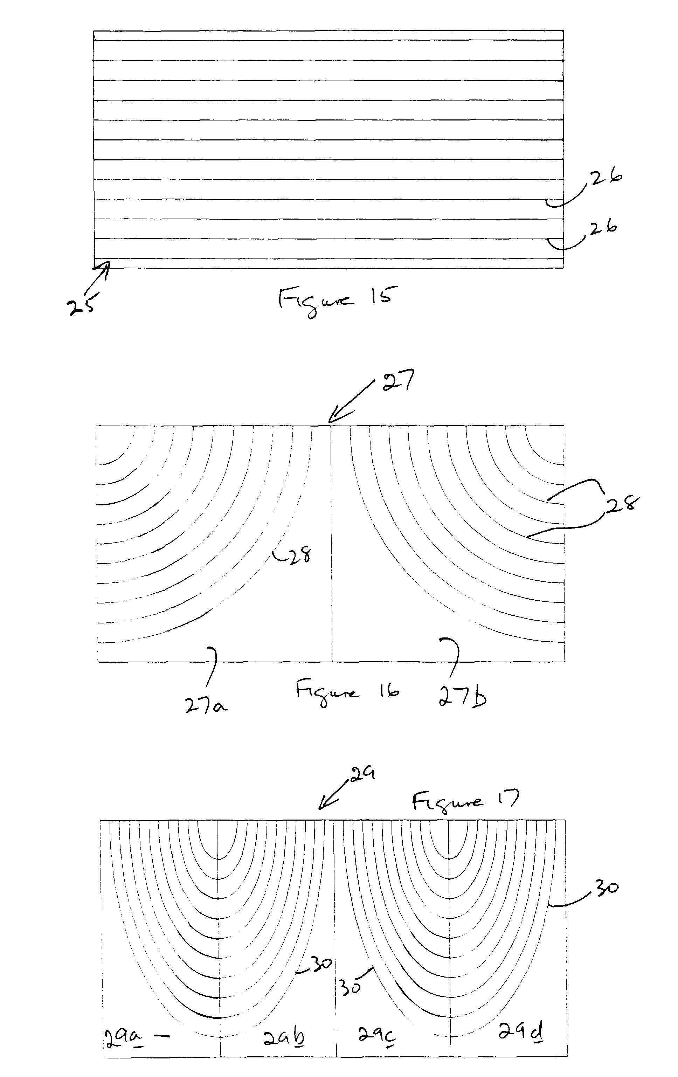

Figure 14 shows application of the panel of Figure 5 in a fully floating timber floor, and
Figures 15, 16 and 17 are plan views of additional panels for use in conjunction with the panels of the present invention.

### Description of the Preferred Embodiments.

The panel 10 shown in Figure 5 is a panel of rigid insulation, particularly foamed polystyrene, which has a plurality of channels 11 formed in its top surface. Each channel 11 includes a number of first sections 11a of a width which is slightly less than the outside diameter of a heating pipe 12 and a plurality of second sections 11b of a width which is considerably greater than the diameter of the pipe 12. Each second section 11b has inclined side walls, as shown in Figure 6.

For example, the panel 10 can be either 40 or 50 mm. in thickness, 2400 mm. in length and 1200 mm. in width. The channels 11 can be arranged at 150 mm., 200 mm., 250 mm. or 300 mm. centres. If the channels 11 are arranged at 200 mm. centres, the second sections 11b will typically have a maximum width within the range of from 75 to 100 mm. whereas, if the channels 11 are arranged at 300 mm. centres, the second sections 11b will typically have a maximum width of 100 to 200 mm. If the heating pipe 12 has an outside diameter of 19 mm., the first channel sections 11a will have a width of 18 mm. whereas, if the heating pipe 12 has an outside diameter of 17 mm., the first channel sections will have a width of 16 mm. Foamed polystyrene has a degree of resilience such that, when the heating pipe 12 is fitted in the channels 11, the heating pipe 12 is held in position by engagement with the channel first sections 11a, without any requirement for a mesh or other fixing devices.

In installation of an underfloor heating system, the panel 10 is used in conjunction with panels 20 constructed as shown in Figure 7. The panel 20 is formed of foamed polystyrene and is of the same thickness as the panel 10. It is cut into three portions of equal size, and then trimmed as appropriate, so as to provide connectors for joining together the channels in a plurality of panels 10 in, for example, the manner illustrated in Figure 9. Each of the connectors includes a number of curvate channels or balloon ends 21, each of substantially the same width as the first channel sections 11a of the panels 10. The radius of the balloon ends can be adjusted to suit the minimum bending radius of the heating pipe 12.

In the particular arrangement shown in Figure 9, six panels 10, each constructed as shown in Figure 5, are placed in position, and connectors formed from panels 20 are then positioned, as shown, so that the curvate channels 21 register with the ends of the channels 11. Once the assembly of panels 10 and connectors has been completed, the heating pipe 12, which is typically a thin-walled flexible plastic tube, is pressed into place in the channels 11 and 21, being held in position by being a push fit in the first channel sections 11a and the channels 21.

After the heating pipe 12 has been pressed into the channels 11 and 21, and any connections to the heating pipe 12 have been made, the screed mix can then be applied using wheelbarrows 22 which are wheeled over duckboards 23, as illustrated in Figure 12, without doing any damage to the heating pipe 12, as opposed to the arrangement shown in Figure 13, which has been used for the known method for the production of screeded floors as illustrated in Figures 1 and 1a. The screed 15 is a sand/cement mixture and is introduced, as shown in Figure 8, so that it covers the panel 10 and fills the second channel sections 11b. The screed 15 is then levelled and allowed to set. A typical screed 15 has a thickness above the upper surface of the panels 10 of between 65 and 75 mm. and, because there are no pipes or other fitments projecting into the thickness of the screed 15, fixings can confidently be drilled into the screed 15 and expansion gaps can be sawn in the screed 15.

An alternative method of applying the screed involves pumping a very runny liquid over the assembled panels. The runny liquid has a self-levelling action and, if this type of screed is to be used, the panels of the underfloor heating system will be provided along their edges with interengaging tongue and groove formations to prevent the runny liquid from escaping through any gaps between adjacent panels.

A heat distribution pattern as shown in Figure 11 is obtained. Thus, each pipe 12 radiates heat through the body of the screed 15 in a particularly efficient manner, with the sand/cement mixture in the second channel sections 11b acting as a heat diffuser.

A similar arrangement will be obtained with the floating floor underfloor heating system shown in Figure 14. This includes a series of panels 10, one only of which is shown in Figure 14. The panel 10 is formed with a series of channels, one only of which is shown. Each channel includes a number of first sections 11a in which the heating pipe 12 is a close fit and a number of second sections 11b which are of substantially greater width than the diameter of the pipe 12. After the pipe 12 has been inserted in the channels so as to be gripped by the first channel sections 11a, a sand/cement mixture 16 is introduced into each of the second channel sections 11b, so as to fill the space available within each second channel section 11b, i.e. the upper surface of the sand/cement mixture is flush with the upper surface of the panel 10. As can be seen from Figure 14, the depth of each channel section 11a, 11b is substantially the same as the diameter of the pipe 12. Thus, for a panel 10 intended to be used in conjunction with a pipe 12 having an external diameter of 19 mm., the channel sections 11a and 11b may have a depth of 20 mm. The sand/cement mixture is an inexpensive, readily available thermally conductive material, which acts as a heat diffuser. After the sand/cement mixture has set, the flooring 17 is laid on top of the panels 10 and typically comprises chipboard panels or planks having tongue and groove formations along their edges.

The panels 10 shown in Figure 5 have second channel sections 11b which have planar end walls which extend vertically at right angles to the axis of the respective channel 11. This channel configuration is produced by first forming longitudinal channels having configurations corresponding to the first channel sections 11a in a panel 10 and then forming the second channel sections 11b by a cutting process using a heated wire of the appropriate shape. The alternative panel construction shown in Figure 10 includes second channel sections 11b which are formed using a routing tool and accordingly have curvate end walls.

The underfloor heating arrangement shown in Figure 9 is produced using panels 10 and 20. Additional panels which can be used in conjunction with the panels 10 are shown in Figures 15, 16 and 17.

The panel 25 shown in Figure 15 is formed with a plurality of parallel channels 26 which are of the same spacing and configuration as the first channel sections 11a of panel 10. A panel 25 will be used in an area where, for any reason, less heat output is required.

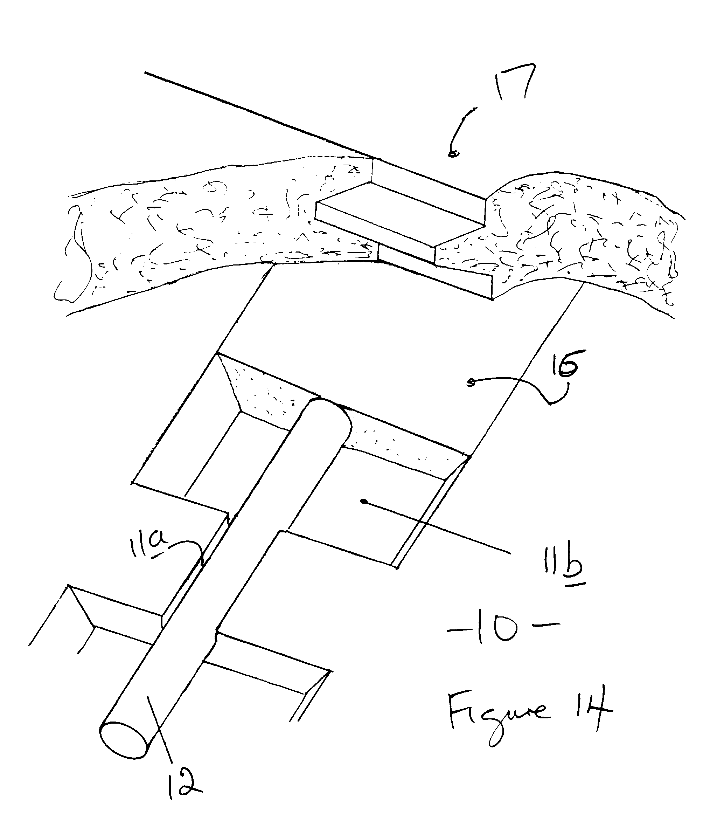

The panel 27 shown in Figure 16 is intended to be cut in half to form two separate panels, 27a and 27b, each of which contains a plurality of parallel curved channels 28 which receive the heating pipe 12 and enable the pipe 12 to be turned through angles up to and including 90°.

The panel 29 shown in Figure 17 is intended to be cut in quarters to form four separate panels 29a, 29b, 29c and 29d. The panels 29a to 29d each contain a plurality of curved channels 30 which receive the heating pipe 12 and are used when it is desired to turn the pipe 12 through 90° and, at the same time, reduce the spacing between adjacent lengths of pipe. For example, such panels may be used when the heating pipes must be brought to the supply manifold.

Use of the panel of the present invention in the installation of an underfloor heating system offers the following advantages over current practice in relation to screeded floors:-
a) The heating pipe sits entirely within the thickness of the insulation and is protected by it. As a consequence, when the pipe is installed, it becomes possible to lay duckboards across the insulation and to transport the screed around the room without risk of damaging the pipe. [See Figures 12 and 13].
b) The channels in which the pipe are located are formed at set spacings. This provides assured heat output and eliminates any dependency on the skill and experience of the installer to achieve the correct pipe spacing.
c) The screed is in sufficient contact with the heating pipe that the difference in heating performance, when compared with current systems having the heating pipe on top of the insulation, is negligible.
d) Use of the panel of the present invention avoids the cost of steel mesh, or the cost of the special insulation which is need to work with staple fixings and the cost of the staples, or the cost of the special fixing rails.
e) Installation of the insulation and the pipe can be undertaken by unskilled site labour and yet it can allow repeatable installation quality to be achieved.
f) With the pipe wholly below the top of the insulation, fixings can be drilled into any part of the depth of the screed and/or expansion gaps can be cut across any part of the screed.

In respect of current practice as applied to fully floating floors, use of the panel of the present invention offers the following advantages over current practice:
a) it avoids the need for expensive, rigid aluminium diffuser plates and the creaking during warming up and cooling down which these can cause,
b) the spacing of the heating pipe is automatically accurately determined by the spacings of the channels in the insulation and this determines the heat output. In this way, a heating panel can be made which provides an assured heat output and consistent installation quality which is not dependent on the skill or accuracy of the installer,
c) the panels can be positioned by an unskilled installer and there is no need for specialist installers to be used,
d) fitting of the heating pipe on site is reduced to a simple procedure of pressing the pipe into the channel in the insulation and this does not require specialist installers, and
e) formation of a heating system on site by specialist installers using separate pipes, insulation and diffuser plates is replaced by the simple installation of standard panels.

The heat output from this construction method is slightly lower than the output from one which uses aluminium heat diffusers but it is still sufficient to suit the heating requirements of a well-insulated new building which is built in accordance with modern building practice.

The panel of the present invention makes installation of underfloor heating in a fully floating floor a simple and inexpensive operation. Rigid installation would be installed in such a floor construction in any event, even if a different non-underfloor heating system was to be used. There is very little additional cost associated with fitting the heating pipe and this does not need specialist labour.

The panel of the present invention can be made inexpensively in large quantities in a factory. It is light in weight and thus easy to handle. The production cost savings arising from this further make it possible to reduce the cost of supplying and installing an underfloor heating system in a screeded floor or in a fully floating floor.

## Claims

1. An underfloor heating panel (10) which is formed with a channel (11) in which a heating pipe (12) is received, the channel (11) including at least one first section (11a) in which the heating pipe is a close fit and at least one second section (11b) which is wider than the or each first section (11a), thermally conductive material being introduced into said at least one second section (11b) in use of the panel (10) to provide an underfloor heating system.

2. A panel is claimed in Claim 1, which is formed with a plurality of channels (11) each of which includes a plurality of first and/or second sections (11a and/or 11b).

3. A panel as claimed in Claim 2, in which the channels (11) are parallel and in which each channel (11) includes a plurality of first sections (11 a) and a plurality of second channels (11b).

4. A panel as claimed in Claim 2, which is formed of foamed polystyrene and in which the or each channel (11) is formed using a routing cutter and/or a heated wire.

5. A method of installing an underfloor heating system which includes providing at least one underfloor heating panel (10) as claimed in Claim 1, inserting a heating pipe (12) in the channel (11) so that it is held in the channel (11) as a result of its close fit in said at least one first section (11a) of the channel (11), and introducing a thermally conductive material into the at least one second section (11b) of the channel (11).

6. A method of installing an underfloor heating system which includes providing a plurality of underfloor heating panels (10), each as claimed in any one of Claims 2 to 4, assembling the panels (10) so that the channels (11) in the panels (10) communicate with one another and/or with channels (26, 28, 30) formed in connector panels (25, 27, 29), inserting a heating pipe (12) in the communicating channels so that it is held as a close fit in said first sections (11a) of the channels (11), and introducing a thermally conductive material into the second sections (11b) of the channels (11).

7. A method as claimed in Claim 6, as applied to a screeded floor, in which the thermally conductive material introduced into the second sections (11b) of the channels (11) is the screed material (15).

8. A method as claimed in Claim 6, as applied to a fully floating floor, in which the thermally conductive material introduced into the second sections (11b) of the channels (11) is a sand/cement mix.

9. A method as claimed in Claim 8, in which the amount of sand/cement mix introduced into the second sections (11b) of the channels (11) is such that its upper surface is flush with the upper surface of the associated panel (10).

10. A method as claimed in Claim 7, in which the panels (10) are provided with tongue and groove formations along their edges.
